(19) Europäisches Patentamt
European Patent Office
Office européen des brevets

(11) Publication number: 0 040 983 A1

# (12) EUROPEAN PATENT APPLICATION

(21) Application number: 81302312.4

(22) Date of filing: 26.05.81

(51) Int. Cl.³: C 01 B 3/04, C 01 B 13/02

(30) Priority: 28.05.80 US 154018

(43) Date of publication of application: 02.12.81 Bulletin 81/48

(84) Designated Contracting States: AT BE CH DE FR GB IT LI LU NL SE

(71) Applicant: THE REGENTS OF THE UNIVERSITY OF CALIFORNIA, 2200 University Avenue, Berkeley, California 94720 (US)

(72) Inventor: Willner, Itamar, 517 Norvell Street, El Cerrito California, 94530 (US)
Inventor: Ford, William E., 721 40th Street, Oakland California, 94608 (US)
Inventor: Otvos, John W., 110 Ravenhill Road, Orinda California, 94563 (US)
Inventor: Calvin, Melvin, 2683, Buena Vista Way, Berkeley California, 94708 (US)

(74) Representative: Harrison, David Christopher et al, MEWBURN ELLIS & CO 70 & 72 Chancery Lane, London WC2A 1AD (GB)

## (54) Method of water photolysis.

(57) The photolysis of water is accomplished in a light illuminated aqueous system using a photosensitizer, such as a manganese porphyrin, in conjunction with an electron acceptor, such as methyl viologen. In the photolysis process, oxygen is produced in an active form whereby it is scavenged from the reactant solution by a trapping agent to yield an organic oxide product. Hydrogen may also be produced from the photolysed water in a compatible reaction with the electron acceptor, and the photosensitizer and the viologen electron acceptor be recycled in the process.

EP 0 040 983 A1

"METHOD OF WATER PHOTOLYSIS

This invention relates to the photolysis of water; and more specifically to the photo-induced transfer and trapping of oxygen from water. The method utilizes a system including a photosensitizer which is a chemical compound having the property of promoting photo chemical reactions. Photosensitizers include metal complexes such as the metal porphyrins. The system also includes an electron acceptor, such as a bipyridinum salt, e.g., viologen, and an agent to trap the active oxygen. At the same time the reduced viologen (or other electron acceptor) may act to liberate hydrogen during the oxygen transfer reactions.

The Government of the United States of America has rights in this invention pursuant to Department of Energy Contract No. W-7405-ENG-48 with the Regents of the University of California.

The rapid depletion of available fossil

fuels has led to a search for alternative fuels which are not dependent upon exhaustible sources. One area of interest has been the conversion of sunlight into easily usable chemical energy through the light induced splitting of water molecules to yield oxygen and hydrogen. A related system is the naturally occurring photosynthesis process in plants wherein light energy is utilized to convert lower energy molecules into higher energy chemical structures of a stable form.

Investigations into synthetic "photosynthesis" systems have generally sought to utilize light energy to induce the splitting of water into its two components, i.e. oxygen and hydrogen, as sources of energy storage and fuel production. In this regard, the photo induced reduction of water to hydrogen using visible light has been described by such investigators as A. Maradpour et. al. in Nouv. J. Chim. 1978, No. 2 pps. 547-549; J.M. Lehn et. al. in Nouv. J. Chim 1977., No. 1 pps 449-451; K.Kalyanasundarum et. al. in Helv. Chim. Acta 1978, No. 61, pps 2720-2730; G M Brown et. al. in J Amer. Chem Soc. 1979, No. 101, pps 1298-1300; J. Kiwi and M. Gratzel, Chimia, V. 33 pp. 289 (1979); and by J Kiwi and M. Gratzel, Angew. Chem. Int. Ed. Engl. V. 18, pp. 629 (1979). An article entitled "Rhodium Complex Splits Water Using Sunlight" appearing

in Chemical and Engineering News, August 1st, 1977 described work by groups at California Institute of Technology and Massachusetts Institute of Technology on the use of rhodium complex molecules in the photoproduction of hydrogen from water. U.S. Patent No. 4 069 120 describes the production of hydrogen and oxygen from water in a process involving a photo dissociation of molecular bromine with visible light and a subsequent electrolytic dissociation of hydrogen halides. U.S. Patent No. 4 045 315 describes the production of hydrogen and oxygen by the solar photolysis of water wherein europium salts are utilized as the photo oxidation reagent and bifunctional reagent catalysts, including transition metal salts such as a manganese oxychloride salt, are utilized as the photo reduction catalyst.

J. Kiwi in an article in the Israel Journal of Chemistry, V. 18, pps 369-374 (1979) describes the use of ruthenium dioxide to produce $H_2$ and $O_2$ from water. J.M. Lehn et. al. in Nouveau J. Chim. V.3, pp 423 (1979) also described the production of $O_2$ from water in a light induced reaction.

Although the above-noted prior art describes photoinduced reduction of water to hydrogen using visible light, the complementary reaction involving the oxidation of water to oxygen present a greater difficulty. The major difficulty associated with water involves the requirement for a 4 electron transfer per molecule to produce oxygen. A step by step process, transferring one electron at a time is not favoured due to the implied formation of active hydroxyl radicals. Therefore it has been proposed to utilize charge storage catalysts in the photoproduction of oxygen. Taking into consideration natural photosynthesis in which current limited knowledge recognizes that manganese ions play an important role in oxygen evolution, one of the co-inventors (Calvin) of the present process had previously proposed (Science 1974, No. 184 Pages 375-381) the use of a binuclear manganese complex as a potential catalyst for oxygen production. So far however, efforts directed towards this goal have been unsuccessful.

Recognizing the difficulties in successfully producing both the hydrogen and oxygen from the photolysis of water, a method has now been devised to avoid the difficult problem of simultaneously evolving molecular hydrogen and molecular oxygen from an homogenous aqueous photolytic system.

The present invention provides a process according to claim 1. Active oxgyen resulting from the action of the photosensitizer and electron acceptor on water in the presence of light is in turn trapped by the trapping agent to produce a recoverable oxygenated product. Simultaneously hydrogen or its precursor may be produced during the photolysis process if a suitable catalyst is present. In particular, a manganese porphyrin can be used as the photosensitizer and a Lewis base or an electron rich organic compound, such as an olefin, or bifunctional acid can be used as the trapping agent.

The photolytic production of active oxygen from water is dependent upon the presence of the photosensitizer as well as the electron acceptor. The manganese porphyrin, 5-(4-hexadecylpyridinium)- 10,15,20-tri(4-pyridyl)-porphinatomanganese (III), hereinafter abbreviated as $Pn\text{-}Mn^{III}$, is particularly suitable as the photosensitizing agent. Methyviologen, i.e. 1,1'-dimethyl-4,4' bipyridinium $^{2+}$, hereinafter abbreviated as $MV^{2+}$, is particularly suitable as the electron acceptor in the process of the invention.

In the presence of the manganese porphyrin (photosensitizer) and methylviologen (electron acceptor) water may be photolysed to produce active oxygen formulated as an intermediary oxo-manganese complex. In the presence of a suitable trapping agent e.g. triphenylphosphine the active oxygen is scavenged from the photosensitizer to produce a recoverable organic oxide product.

Simultaneous with the production of the active oxygen and its subsequent scavenging from the solution by the trapping agent, the reduced methylviologen also reacts to reduce water into hydrogen in the presence of platinum, or other suitable material, as a catalyst.

In the course of the process of the invention the photosensitizer and the electron acceptor may be completely recycled so that in effect water is used up in the photolysis process while an oxygenated organic material and hydrogen are the output products.

The process of the invention achieves the photo induced splitting of water into its component elements, i.e., hydrogen and oxygen. However, in the present instance, oxygen gas is not a product, but rather active oxygen, i.e., the single oxygen atom as it appears in a water molecule. This active oxygen is scavenged from the reaction solution to form an organic oxide product. The organic oxide product may then be separated from the reaction mixture; as may the corresponding water derived product, hydrogen.

As will be apparent, the energy necessary to drive the reaction is derived from a light source, e.g. the sun. The reagents may be chosen so that the relatively low level of energy derived from the light source is sufficient to drive the cyclic reactions and produce the above-mentioned products.

In the process water is oxidized and the single oxygen released from the water molecule is trapped by a substrate material or trapping agent, which may be an oxidizable organic compound. Hydrogen is simultaneously formed during the oxidation-reduction cycle.

The photosensitizer, manganese porphyrin, has the ability to change in oxidation number by at least two units during the oxidation-reduction sequence. Photosensitizers with this ability are preferred. Upon yielding the oxygen to the trapping agent, the porphyrin is recycled into the original oxidation state, whereby it is once again available to enter into the oxidation-reduction cycle with water.

The oxidation state changes, at least in the oxidation portion of the cyclic sequence, are facilitated by an electron acceptor, such as methyl viologen. Illumination of the system results in the reduction of the methyl viologen, $MV^{2+}$, to the corresponding radical cation, $MV^{\dot{+}}$. The reduction of the methyl viologen to the radical cation, $MV^{\dot{+}}$ is accompanied by a corresponding oxidation of the trapping substance.

The trapping agent, e.g. an oxidizable organic compound such as triphenylphosphine or an olefin, e.g., cyclohexene, acts to trap or scavenge the active oxygen believed to be coordinated to the manganese porphyrin. In the process the trapping agent is itself oxidized to a corresponding oxy compound which can be recovered from the reaction solution.

At the same time as the active oxygen is

trapped, water is reduced to yield hydrogen as a product. The hydrogen evolution is mediated by the methylviologen in the presence of a suitable catalyst, preferably platinum. The rate of hydrogen evolution depends light intensity, amount of acceptor, type of catalyst etc. However, in some experiments, hydrogen evolution at a rate of 0.03-0.6$\mu$moles/hour of illumination, as monitored by gas chromatography, has been observed. The ability of methyviologen to reduce water into hydrogen in the presence of suitable catalysts is already known (see J.R. Bolton, Science, 1978, V 202, pps 705-711).

A reaction scheme has been propsed for a photolysis process in accordance with the invention. Such scheme is of interest in understanding the cyclic sequence and interaction of the light, water, photosensitizer, electron acceptor, and trapping agent. However, it should be viewed as an aid in understanding the present process, rather than as a proven reaction sequence accounting for the photolysis of water as accomplished by the present invention.

The reaction scheme is as follows:

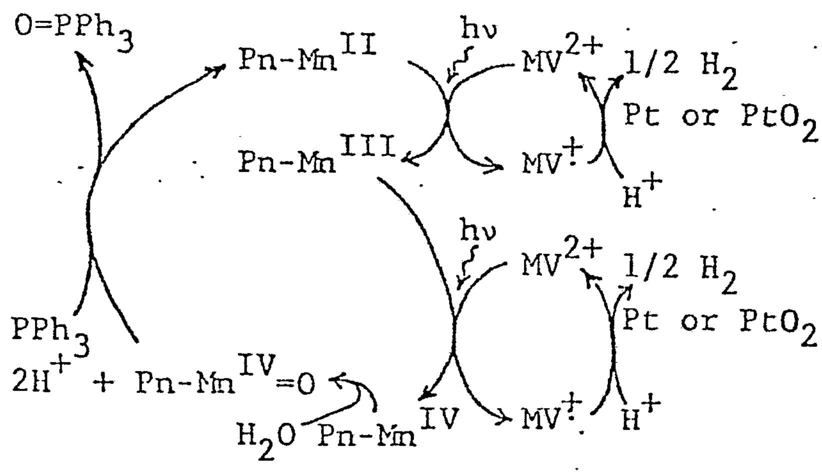


where:

$Pn\text{-}Mn$ = manganese porphyrin

$MV^{2+}$ = methyl viologen

$PPh_3$ = triphenyl phosphine

O = oxygen

Pt = platinum catalyst

$PtO_2$ = platinum oxide catalyst

hν = light energy

In practice the photolysis reaction is carried out in a suitable reaction vessel which has provisions for admitting light into the interior thereof.

Suitably a homogeneous mixture of the porphyrin photosensitizer, the viologen electron acceptor, and the trapping agent is placed into the vessel in aqueous solution along with a solvent such as methanol or acetonitrile and a buffering agent to maintain the reaction mixture at a slightly acid, about 4.5, pH.

The reaction mixture is then illuminated with light for a period of time, several minutes to hours, sufficient to accumulate the reaction products, i.e., the oxy-organic trapping material and hydrogen or hydrogen precursors.

The reaction products may then be recovered from the reaction vessel by standard chemical separation techniques.

A further understanding of the reaction components will be obtained from the following data:

Synthesis of the Manganese Porphyrins.

The manganese porphyrins useful as photosensitizing agents in the invention may be synthesized from commercially available meso-tetra (4-pyridyl) porphyrin by a quaternization reaction

with a suitable alkyl halide (the bromo-halide is preferred). The alkylated porphyrins are then converted to the metal chelates by reaction with the desired metal salts.

More specifically, the desired manganese porphyrin, 5-(4-hexadecyl pyridinium)-10,15,20-tri(4-pyridyl)-porphinatomanganese (III), may be produced by refluxing meso-tetra (4-pyridyl) porphyrin (306 mg., 0.49 mmol) and cetyl bromide (2.1g., 6.8 mmol) in dimethyl-formamide (300 ml) for 4 hours under a nitrogen atmosphere. The solvent is then removed and the residue is washed repeatedly (3 times) with ether to remove excess bromide. The washed mixture is dissolved in methanol and the unreacted porphyrin is filtered off. The product is then purified by repeated gel filtration over Sephadex LH-20, eluted with methanol. The product is further purified by precipitations from methanol-ether and ethanol-ether. The product is dried at 50$^{\circ}$C in vacuo over $P_2O_5$.

The alkylated porphyrin product as derived above is then converted to the metal (manganese) chelate by refluxing with manganese acetate-tetrahydrate in acetic acid media for perhaps 35 minutes. The mixture is evaporated to dryness and purified by chromatography over alumina with 20% methanol-chloroform.

The resultant purified manganese porphyrin is suitable for use as the photosensitizer in the present invention.

The Electron Acceptor.

Methyl viologen, 1,1'-dimethyl-4,4'-biyridinium $^{2+}$, (herein abbreviated as $MV^{2+}$) is a commercially available product from Sigma Chemicals of St. Louis, Mo. Methyl viologen readily accepts an electron and is thereby reduced to the corresponding viologen radical cation (herein abbreviated as $MV^{\dot{+}}$). The viologen radical cation, $MV^{\dot{+}}$, exhibits a characteristic intense blue color in aqueous solutions, and this blue color may be monitored as an indication of the progress of the photolysis reaction.

The Trapping Agent.

The trapping agent may be any suitable organic Lewis base, or an electron rich organic compound, such as olefins, bifunctional acids, etc., which is capable or reacting with the active oxygen that has been coordinated with the photosensitizer, manganese porphyrin. Reaction with the active oxygen produces the corresponding oxide. Successful active oxygen trapping hasalready been demonstrated

with triphenylphosphine, abbreviated herein as $PPh_3$. In the system of the invention, $PPh_3$, scavenges active oxygen from its coordination with the oxidized manganese porphyrin to produce triphenylphosphine oxide. The triphenylphosphine oxide is recoverable.

Other trapping agents are also suitable for use in the invention process. Preliminary tests indicate that an olefin, e.g., cyclohexene, will also function as an oxygen trapping agent. Such conclusions are reached by adding the olefin to the reaction mixture of water, photosensitizer and electron acceptor. The olefin exhibits behavior similar to $PPh_3$; that is, the rates of reduction of Pn-Mn $^{III}$and $MV^{2+}$ are enhanced when compared to the identical system in the absence of a trapping agent. Alkyl and/or acyl halides, such as iodobenzene, are also useful for this function. Similar utility of bifunctional organic acids, e.g., phthalic acid, as trapping agents in the invention process are also indicated.

The following Examples illustrate various aspects of the invention:

Example I

A homogeneous mixture including 2.75 mls. of methanol, 0.25 mls. of aqueous phosphate buffer (pH 4.5, 0.36M), Pn-Mn $^{III}$ ($9X10^{-6}M$), $MV^{2+}$($1.5X10^{-3}M$), and $PPh_3$ ($3.25X10^{-2}M$), was sealed in a cuvette under a nitrogen atmosphere. The mixture was then illuminated with a 900 W xenon arc lamp filtered through a cupric sulfate solution. The illumination resulted in the formation of $MV^{\dagger}$ as indicated by the development of the characteristic blue color. Additionally, changes in the absorption spectrum of the manganese porphyrin were noted. These changes were consistent with the spectrum characteristics of Pn-$Mn^{III}$ reduction to Pn-$Mn^{II}$.

Continued illumination of the noted mixture resulted in a continuous reduction of $MV^{2+}$ to its radical cation $MV^{\dagger}$.

On the other hand, when $PPh_3$ was excluded from an identical mixture as noted above, a considerable decrease in the rate of Pn-$Mn^{III}$ to Pn-$Mn^{II}$ conversion, as well as in the rate of $MV^{\dagger}$ production, was noted. It is indicated, therefore, that the trapping agent ($PPh_3$) plays a central role in the photosensitized reduction of $MV^{2+}$. Comparison of the Pn-$Mn^{III}$

concentration ($9X10^{-6}M$) with the amount of $MV^{+}$ produced ($1.4X10^{-4}M$) indicated the presence of an oxidation - reduction mechanism, wherein the manganese porphyrin is recycled.

When air was introduced into the cuvette, $MV^{+}$ reoxidized to $MV^{2+}$, and $Pn\text{-}Mn^{II}$ to $Pn\text{-}Mn^{III}$. The visible absorption spectrum of the aerated sample revealed no change in the initial concentration of $Pn\text{-}Mn^{III}$. Thus, the photosensitizer is completely recycled in the oxidation - reduction sequence.

Example II

A mixture including 2.5 mls. of $6X10^{-3}M$ $MV^{2+}$ in acetonitrile, 30 mgs. ($3X10^{-2}M$) of $PPh_3$, 0.2 ml. of hydrochloric acid ($10^{-3}M$), $Pn\text{-}Mn^{III}$ ($10^{-5}M$), and 0.25 ml. of Pt supported on polyvinyl alcohol (approx. $10^{-3}M$) was sealed in a cuvette under argon atmosphere. The mixture was continually stirred and illuminated with a 900 W xenon arc lamp filtered through a cupric sulfate solution.

No formation of $MV^{+}$ observed, even though $Pn\text{-}Mn^{III}$ was reduced to $Pn\text{-}Mn^{II}$. The only explanation for this observation was that $MV^{+}$ was being consumed as soon as it formed to produce hydrogen at the Pt (present in part as $PtO_2$) catalyst sites.

After 2 hours of illumination hydrogen was detected in the gas space of the cuvette. The amount of hydrogen detected corresponded to 0.03-0.6 $\mu$ moles of hydrogen/hour of illumination. From the solution triphenylphosphine oxide was recovered. The amount of oxide corresponded to an approximate conversion of 1%.

CLAIMS:

1. A method for photolysing water by illuminating an aqueous system characterised in that the system includes a photosensitizer agent capable of co-ordinating with atomic oxygen, an electron acceptor, and an oxygen trapping agent, and in that illumination of the system results in the formation of a recoverable oxide product of the oxygen trapping agent.

2. A method according to Claim 1 wherein hydrogen is produced by the catalytic reduction of water in reaction with the electron acceptor.

3. A method according to Claim 1 or Claim 2 wherein said photosensitizer agent is a manganese porphyrin.

4. A method according to to Claim 3 wherein said manganese porphyrin is 5-(4-hexa-decylpyridinium)-10,15,20-tri(4-pyridyl)porphinatomanganese (III).

5. A method according to any one of the preceding Claims wherein said electron acceptor is a biphyridinium salt.

6. A method according to Claim 5 wherein said electron acceptor is 1,1'-di-methyl-4,4'-bipyridinium$^{2+}$.

7. A method according to any one of the preceding claims wherein said trapping agent is a nucleophilic organic compound.

8. A method according to Claim 7 wherein said nucleophilic organic compound is triphenylphosphine, a bifunctional organic acid, or an olefin.

9. A method according to Claim 7 wherein said nucleophilic organic compound is an organic halide.

10. A method according to Claim 9 wherein said organic halide is an aryl iodi=de.

11. A method according to any one of Claims 1 to 6 wherein said oxide product is an epoxide.

12. A method according to any one of the preceding claims wherein said photosensitizing agent and said electron acceptor are recycled.

European Patent Office

# EUROPEAN SEARCH REPORT

0040983

Application number
EP 81 30 2312.4

## DOCUMENTS CONSIDERED TO BE RELEVANT

| Category | Citation of document with indication, where appropriate, of relevant passages | Relevant to claim |
|---|---|---|
| | DE - A1 - 2 815 785 (NATIONAL RESEARCH DEVELOPMENT)<br>* claims 1, 5, 15 *<br>-- | 1-6 |
| D | US - A - 4 045 315 (J.C. FLETCHER)<br>-- | |
| D | US - A - 4 069 120 (R.G. MEYERAND et al.)<br>-- | |
| A | US - A - 4 105 517 (R.A. FROSCH)<br>-- | |
| A | FR - A1 - 2 432 475 (ANVAR)<br>---- | |

CLASSIFICATION OF THE APPLICATION (Int. Cl.³)

C 01 B 3/04
C 01 B 13/02

TECHNICAL FIELDS SEARCHED (Int. Cl.³)

B 01 J 19/00
C 01 B 3/00
C 01 B 13/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 18-08-1981 | KESTEN |

EPO Form 1503.1 06.78